# EUROPEAN PATENT APPLICATION

(11) **EP 4 681 534 A1**
(43) Date of publication of application: **21.01.2026**
(21) Application number: 25188507.5
(22) Date of filing: 09.07.2025
(51) Int. Cl.: A01M 29/00, A01K 11/00, G06F 21/32

(54) **PROCESSING DEVICE, PROCESSING METHOD, AND PROGRAM**

(30) Priority: 19.07.2024 JP 2024116094
(71) Applicant: NEC Corporation, 108-8001 Tokyo (JP)
(72) Inventor: TANAKA, Hiroaki, Tokyo, 108-8001 (JP); TAKAGI, Kazuo, Tokyo, 108-8001 (JP)
(74) Representative: Vossius & Partner Patentanwälte Rechtsanwälte mbB

(57) **Abstract**

A processing device according to an aspect of the present disclosure is capable of cooperating with another device by being connected to the other device, the processing device and includes, a determination means for determining whether a user is a person who is permitted to use the processing device when using the processing device; a setting means for enabling a first function that is a function for identifying a person of the processing device in a case where the determination means determines that the user is a person who is permitted to use the processing device, and disables the first function in a case where the determination means determines that the user is not a person who is permitted to use the processing device, and an instruction means for causing the processing device to output a signal for enabling tracking of the processing device in a case where the setting means disables the first function.

## Description

This application is based upon and claims the benefit of priority from Japanese patent application No. 2024-116094, filed on July 19, 2024, the disclosure of which is incorporated herein in its entirety by reference.

### TECHNICAL FIELD

The present disclosure relates to a processing device, a processing method, and a program.

### BACKGROUND ART

In recent years, damage caused by harmful animals such as bears has increased, and the harmful animals have been exterminated. In the case of exterminating a harmful animal, for example, a hunter enters a mountain and exterminates the harmful animal with a gun. However, in the mountains, visibility is poor, it is difficult to distinguish between a vermin and a person, and a hunter may shoot a person by mistake as a vermin. JP 2023-168167 A discloses a technique related to pest control as a related technique.

### SUMMARY

In the technical field related to pest control described in JP 2023-168167 A and the like, a technology capable of identifying a person and a technology capable of taking measures against theft of a device for identifying a person are required.

An object of each aspect of the present disclosure is to provide a processing device, a processing system, a processing method, and a program that can solve the above problems.

According to one aspect of the present disclosure, a processing device is capable of cooperating with another device by being connected to the other device, and includes a determination means for determining whether a user is a person who is permitted to use the processing device when using the processing device, a setting means for enabling a first function that is a function for identifying a person of the processing device in a case where the determination means determines that the user is a person who is permitted to use the processing device, and disables the first function in a case where the determination means determines that the user is not a person who is permitted to use the processing device, and an instruction means for causing the processing device to output a signal for enabling tracking of the processing device in a case where the setting means disables the first function.

According to another aspect of the present disclosure, a processing system includes the processing device, and the other device capable of cooperating with the processing device by being connected to the processing device.

According to another aspect of the present disclosure, a processing method is performed by a processing device capable of cooperating with another device by being connected to the other device, and includes determining whether a user is a person who is permitted to use the processing device when using the processing device, enabling a first function that is a function for identifying a person of the processing device in a case where the user is determined as a person who is permitted to use the processing device, and disables the first function in a case where the user is determined as not a person who is permitted to use the processing device, and causing the processing device to output a signal for enabling tracking of the processing device in a case where the first function is disabled.

According to another aspect of the present disclosure, a program causes a computer of a processing device capable of cooperating with another device by being connected to the other device to execute determining whether a user is a person who is permitted to use the processing device when using the processing device, enabling a first function that is a function for identifying a person of the processing device in a case where the user is determined as a person who is permitted to use the processing device, and disables the first function in a case where the user is determined as not a person who is permitted to use the processing device, and causing the processing device to output a signal for enabling tracking of the processing device in a case where the first function is disabled.

According to each aspect of the present disclosure, it is possible to identify a person and to take measures against theft.

### BRIEF DESCRIPTION OF THE DRAWINGS

Fig. 1 is a diagram illustrating an example of a configuration of a processing system according to some example embodiments of the present disclosure;
Fig. 2 is a diagram illustrating an example of a configuration of a processing device according to some example embodiments of the present disclosure;
Fig. 3 is a diagram illustrating an example of a configuration of an interrogator according to some example embodiments of the present disclosure;
Fig. 4 is a diagram illustrating an example of reception power of a first signal transmitted from an antenna according to some example embodiments of the present disclosure and received by a transponder included in a processing device of a transmission destination;
Fig. 5 is a diagram illustrating an example of a range in which an antenna according to some example embodiments of the present disclosure transmits a first signal;
Fig. 6 is a diagram illustrating an example of a first signal transmitted by an antenna according to some example embodiments of the present disclosure;
Fig. 7 is a diagram illustrating an example of a configuration of a transponder according to some example embodiments of the present disclosure;
Fig. 8 is a diagram illustrating an example of a configuration of another device according to some example embodiments of the present disclosure;
Fig. 9 is a diagram illustrating an example of a processing flow of a processing system according to some example embodiments of the present disclosure;
Fig. 10 is a diagram illustrating an example of a configuration of an interrogator according to an example embodiment of the present disclosure;
Fig. 11 is a diagram illustrating an example of reception power of a transponder of a SUM signal and a DIFF signal transmitted by an antenna according to an example embodiment of the present disclosure;
Fig. 12 is a diagram illustrating a first example of a difference in reception power between a SUM signal and a DIFF signal received by a transponder according to an example embodiment of the present disclosure;
Fig. 13 is a diagram illustrating a second example of a difference in reception power between a SUM signal and a DIFF signal received by a transponder according to an example embodiment of the present disclosure;
Fig. 14 is a diagram illustrating an example of a processing flow of a processing system according to a modification of an example embodiment of the present disclosure;
Fig. 15 is a diagram illustrating an example of a configuration of a processing device according to some example embodiments of the present disclosure;
Fig. 16 is a diagram illustrating an example of a processing flow of a processing device according to some example embodiments of the present disclosure; and
Fig. 17 is a schematic block diagram illustrating a configuration of a computer according to at least one example embodiment.

### EXAMPLE EMBODIMENT

Hereinafter, example embodiments will be described in detail with reference to the drawings.

### <Example embodiment>

### (Configuration of processing system)

A processing system 1 according to an example embodiment of the present disclosure will be described with reference to the drawings. A processing device 10 to be described later in the processing system 1 is a device that can identify a desired person and is a device to which a theft countermeasure is applied.

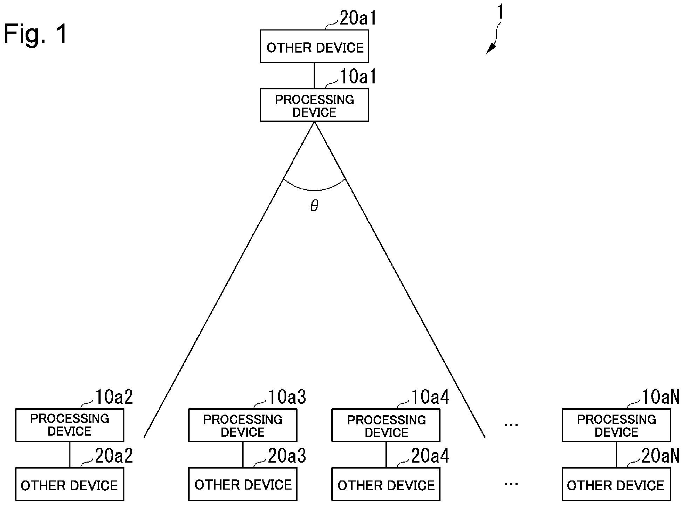

Fig. 1 is a diagram illustrating an example of a configuration of the processing system 1 according to some example embodiments of the present disclosure. As illustrated in Fig. 1, the processing system 1 includes processing devices 10a1, 10a2, 10a3,..., and 10aN, and other devices 20a1, 20a2, 20a3,..., and 20aN. The processing devices 10a1, 10a2, 10a3,..., and 10aN may be collectively referred to as a processing device 10. The other devices 20a1, 20a2, 20a3,..., and 20aN may be collectively referred to as the other device 20.

### (Configuration of processing device)

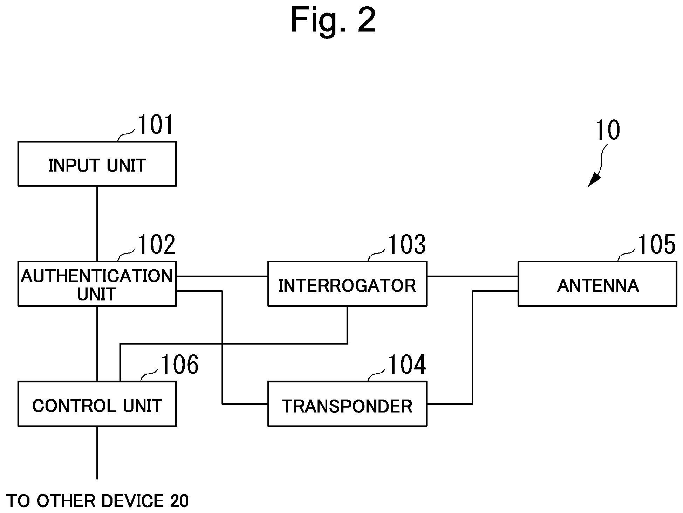

The processing device 10 is a device that can cooperate with the other device 20 by being connected to the other device 20. Fig. 2 is a diagram illustrating an example of a configuration of the processing device 10 according to some example embodiments of the present disclosure. As illustrated in Fig. 2, the processing device 10 includes an input unit 101, an authentication unit 102 (example of determination means, example of setting means, and example of instruction means), an interrogator 103, a transponder 104, an antenna 105, and a control unit 106.

The input unit 101 acquires authentication information. The authentication information is information used when the authentication unit 102 determines whether the use of the processing device 10 is permitted when the processing device 10 is used. Examples of the authentication information include otoacoustic information, iris information, face information, fingerprint information, and an input code.

In a case where the authentication information is otoacoustic information, the input unit 101 may include a hearable device and directly acquire the otoacoustic information. In a case where the authentication information is otoacoustic information, a hearable device may exist separately from the input unit 101, and the input unit 101 may acquire the otoacoustic information acquired by the hearable device.

In a case where the authentication information is iris information or the face information, the input unit 101 may include a camera and directly acquire the iris information or the face information. In a case where the authentication information is iris information or the face information, a camera may exist separately from the input unit 101, and the input unit 101 may acquire the iris information or the face information acquired by the camera.

In a case where the authentication information is fingerprint information, the input unit 101 may include a fingerprint sensor and directly acquire the fingerprint information. In a case where the authentication information is fingerprint information, there may be a fingerprint sensor separately from the input unit 101, and the input unit 101 may acquire fingerprint information acquired by the fingerprint sensor.

In a case where the authentication information is an input code, the input unit 101 may include an input device such as a keyboard or a microphone and directly acquire the input code. In a case where the authentication information is an input code, an input device may exist separately from the input unit 101, and the input unit 101 may acquire the input code acquired by the input device.

The authentication unit 102 determines whether the user is permitted to use the processing device 10 when using the processing device 10 based on the authentication information acquired by the input unit 101. For example, the authentication unit 102 stores authentication information of a person permitted to use the processing device 10 in advance, and determines whether the authentication information acquired by the input unit 101 matches the stored authentication information. Then, in a case where the authentication information acquired by the input unit 101 is determined to match the stored authentication information, the authentication unit 102 determines that the user is permitted to use the processing device 10. In a case where it is determined that the authentication information acquired by the input unit 101 does not match the stored authentication information, the authentication unit 102 determines that the user is not authorized to use the processing device 10.

In a case where it is determined that the user is authorized to use the processing device 10, the authentication unit 102 causes the interrogator 103 to transmit a first signal to be described later via the antenna 105.

In a case where it is determined that the user is not a person permitted to use the processing device 10, the authentication unit 102 disables the interrogator 103 from transmitting the first signal. Then, the authentication unit 102 causes the transponder 104 to transmit a position signal to be described later.

The case where the authentication unit 102 causes the interrogator 103 to transmit the first signal to be described later via the antenna 105 is an example of enabling a first function that is a function for identifying the person of the processing device 10. The case where the authentication unit 102 disables the interrogator 103 from transmitting the first signal is an example of disabling the first function that is a function for identifying the person of the processing device 10.

### (Configuration of interrogator)

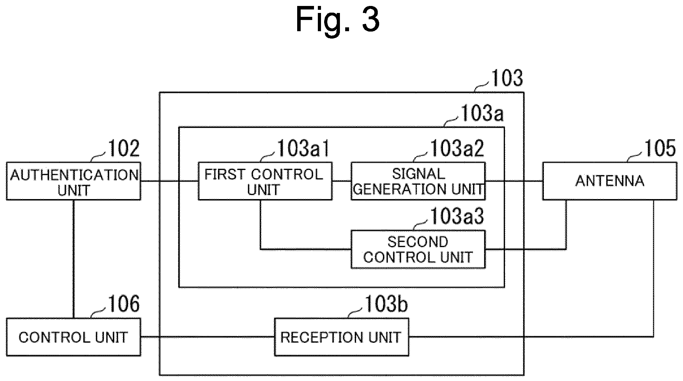

Fig. 3 is a diagram illustrating an example of a configuration of the interrogator 103 according to some example embodiments of the present disclosure. As illustrated in Fig. 3, the interrogator 103 includes a transmission unit 103a and a reception unit 103b. Fig. 3 illustrates the authentication unit 102, the antenna 105, and the control unit 106.

As illustrated in Fig. 3, the transmission unit 103a includes a first control unit 103al, a signal generation unit 103a2, and a second control unit 103a3.

The first control unit 103a1 instructs the second control unit 103a3 to output a first signal that is a signal for identifying a person from the antenna 105. The first control unit 103a1 causes the signal generation unit 103a2 to generate the first signal to be output from the antenna 105. Examples of the first signal that the first control unit 103a1 causes the signal generation unit 103a2 to generate include a sum signal (hereinafter, described as "SUM signal") and a difference signal (hereinafter, described as "DIFF signal").

The first control unit 103a1 instructs the signal generation unit 103a2 to output the generated signal to the antenna 105 at a predetermined timing. For example, the first control unit 103a1 instructs the signal generation unit 103a2 to output the generated SUM signal to the antenna 105 at a first timing. For example, the first control unit 103a1 instructs the signal generation unit 103a2 to output the generated DIFF signal to the antenna 105 at a second timing that is a predetermined time after the first timing.

The signal generation unit 103a2 generates the first signal in response to an instruction from the first control unit 103a1. The signal generation unit 103a2 outputs the generated first signal to the antenna 105 at a predetermined timing in response to an instruction from the first control unit 103a1.

The second control unit 103a3 controls the direction in which the antenna 105 outputs the first signal in response to an instruction from the first control unit 103a1. For example, in a case where the antenna 105 is an array antenna, the second control unit 103a3 can shift the irradiation direction of the first signal leftward or rightward by a predetermined angle (for example, α degrees) with respect to the reference direction by controlling the phase of the first signal for each antenna element. The antenna 105 is not limited to the array antenna, and the second control unit 103a3 may perform control to physically shift the direction of the antenna 105 leftward or rightward by a predetermined angle with respect to the reference direction. The antenna 105 is not limited to one antenna. The antenna 105 may be, for example, two horn antennas, and may output the SUM signal and the DIFF signal having the same amplitude and the same phase under the control of the second control unit 103a3.

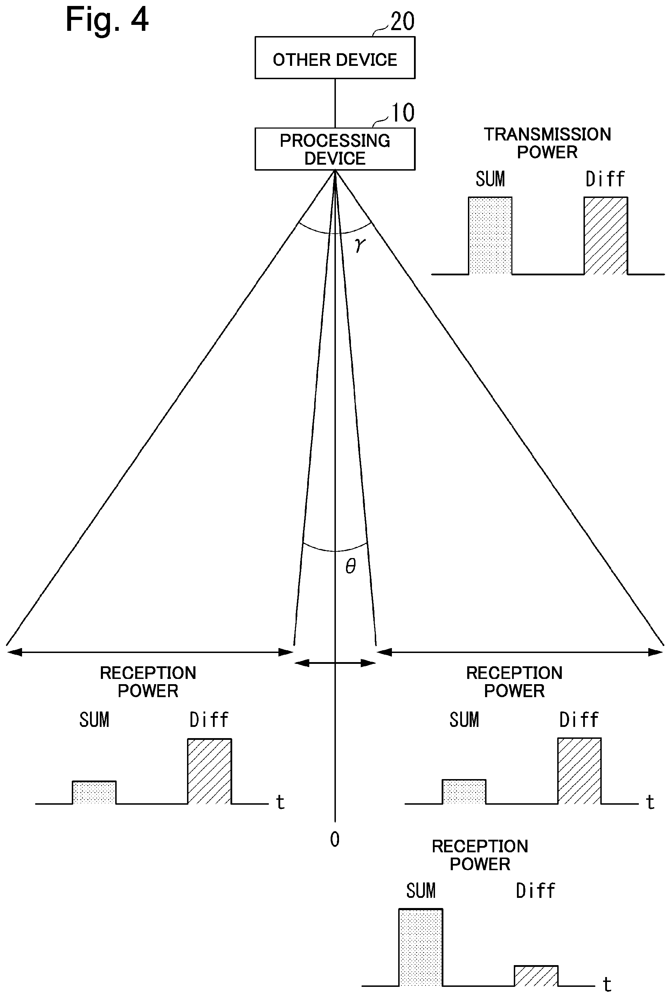

Fig. 4 is a diagram illustrating an example of reception power of a first signal transmitted from the antenna 105 according to some example embodiments of the present disclosure and received by the transponder 104 included in the processing device 10 of a transmission destination. Here, in the example of the processing system 1 illustrated in Fig. 1, the antenna 105 included in the processing device 10a1 transmits the SUM signal and the DIFF signal, which are the first signals, to the processing devices 10a3 and 10a4. In the example of the processing system 1 illustrated in Fig. 1, the transponders 104 of the processing devices 10a3 and 10a4 receive the SUM signal and the DIFF signal which are the first signals. The second control unit 103a3 controls the output of the antenna 105 so that the SUM signal is stronger (that is, the reception power increases) than the DIFF signal in the center region (the region of the range of the angle θ degree in the range of the angle γ illustrated in Fig. 4) due to interference at a distance from the antenna 105. The second control unit 103a3 performs control such that the SUM signal becomes weaker (that is, the reception power decreases) than the DIFF signal in a peripheral region (a region excluding the range of the angle θ degrees in the range of the angle γ illustrated in Fig. 4) due to interference at a distance from the antenna 105.

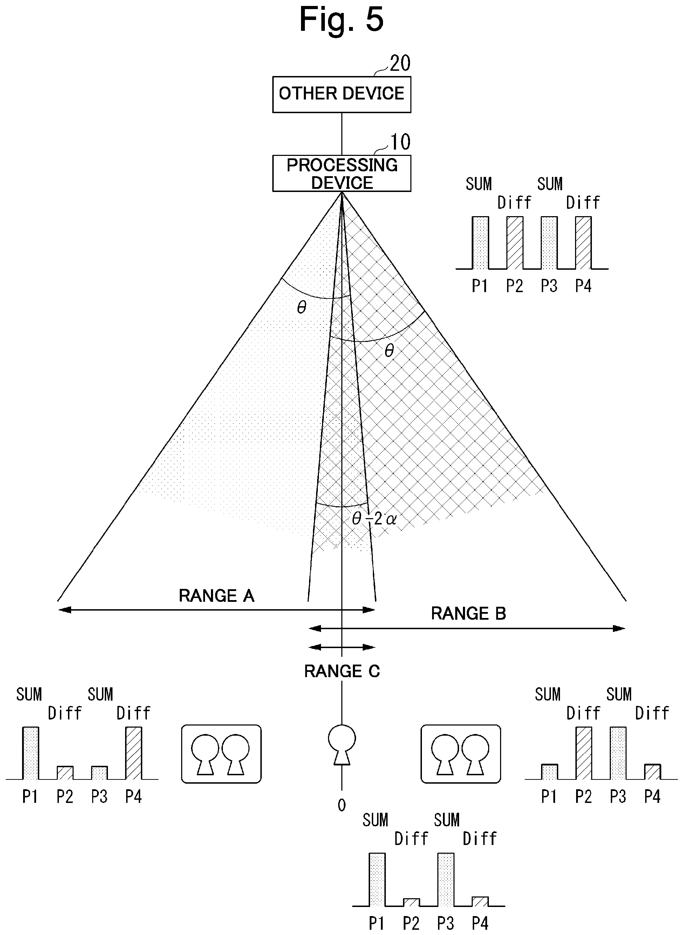

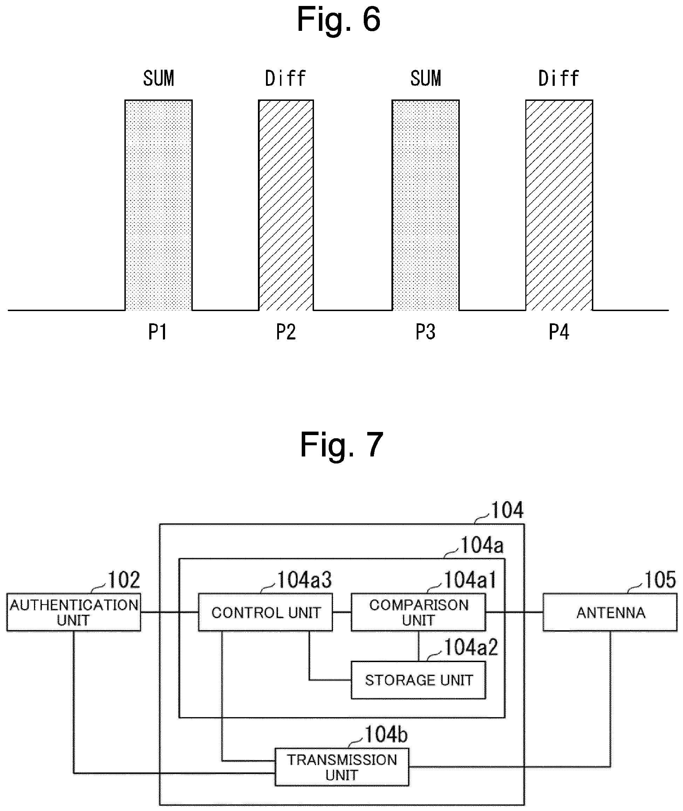

The antenna 105 is an antenna capable of transmitting the first signal in a direction shifted leftward or rightward by a predetermined angle with respect to the reference direction (that is, in at least two different ranges) under the control of the second control unit 103a3. Fig. 5 is a diagram illustrating an example of a range in which the antenna 105 transmits the first signal according to some example embodiments of the present disclosure. Fig. 6 is a diagram illustrating an example of the first signal transmitted by the antenna 105 according to some example embodiments of the present disclosure. "0" in Fig. 5 indicates a reference direction. The angle θ in Fig. 5 indicates a range in which the reception power of the SUM signal is larger than the reception power of the DIFF signal. A range A in Fig. 5 is a range in which the reception power of the SUM signal received by the transponder 104 is larger than the reception power of the DIFF signal in a case where the direction of the antenna 105 is shifted leftward by a predetermined angle α degrees with respect to the reference direction. A range B in Fig. 5 is a range in which the reception power of the SUM signal received by the transponder 104 is larger than the reception power of the DIFF signal in a case where the direction of the antenna 105 is shifted rightward by a predetermined angle α degrees with respect to the reference direction. A range C in Fig. 5 is a range common to both the range A and the range B, that is, a range in which the reception power of the SUM signal received by the transponder 104 is larger than the reception power of the DIFF signal on both the left and right sides in a case where the direction of the antenna 105 is shifted leftward or rightward by a predetermined angle α degrees with respect to the reference direction.

Here, it is assumed that the signal generation unit 103a2 transmits the SUM signal of a signal P1 and the DIFF signal of a signal P2 having the same signal amplitude illustrated in Fig. 6 via the antenna 105 in the range A and transmits the SUM signal of a signal P3 and the DIFF signal of a signal P4 having the same signal amplitude illustrated in Fig. 6 via the antenna 105 in the range B in response to an instruction from the first control unit 103a1. It is assumed that the interrogator 103 and the transponder 104 recognize in advance whether each of the signals P1, P2, P3, and P4 is a high level signal or a low level signal, the timing of transmitting the signal P2 after transmitting the signal P1, and the timing of transmitting the signal P4 after transmitting the signal P3. In this case, the range C common to both the range A and the range B can be adjusted by adjusting the angle α degrees. Then, as will be described later, the transponder 104 receives all of the signals P1, P2, P3, and P4, and responds to the interrogator 103 according to the combination of the received signals, so that only the transponder 104 (that is, suitable transponder 104) existing in the range C can respond (transmit a response signal to the interrogator 103). The response signal is a signal that responds to the first signal.

The reception unit 103b receives the response signal transmitted by the transponder 104 in response to the first signal via the antenna 105. The response signal may include not only the reply from the transponder 104 (that is, information for recognizing that a specific person who possesses the transponder 104 exists in the range C) but also information on the detailed information of the person in possession (for example, identification numbers of the processing device 10 and the other device 20, and in the case of the person, attributes, and the like). The reception unit 103b specifies the transponder 104 that has transmitted the received response signal. With this specification, it is possible to recognize that a specific person who possesses the transponder 104 exists in the range C.

In a case where the authentication unit 102 disables the first function, the first control unit 103a1 stops.

The reception unit 103b receives, via the antenna 105, the response signal transmitted by the transponder 104 that is the transmission destination of the first signal. The response signal may include not only a simple reply (that is, information for recognizing that a specific person who possesses the transponder 104 exists in the range C) from the transponder 104 as the transmission destination of the first signal but also information of detailed information (for example, identification numbers of the processing device 10 and the other device 20, and in the case of the person, attributes, and the like) of the person in possession. In a case where the reception unit 103b receives the response signal, the reception unit can recognize that the person who possesses the transponder 104 that has transmitted the received response signal exists in the range C.

The reception unit 103b receives, via the antenna 105, the position signal transmitted by the transponder 104 included in the processing device 10 different from the processing device 10 including the reception unit 103b. In a case where the reception unit 103b receives the position signal, the reception unit can specify the position of the processing device 10 including the transponder 104 that has transmitted the position signal by the position information included in the received position signal.

The antenna 105 transmits the first signal generated by the signal generation unit 103a2. The antenna 105 receives a response signal transmitted in response to the first signal by the transponder 104 included in the processing device 10 different from the processing device 10 including the antenna 105. The antenna 105 receives the first signal transmitted by the interrogator 103 included in the processing device 10 different from the processing device 10 including the antenna 105. The antenna 105 receives a position signal transmitted by the transponder 104 included in the processing device 10 different from the processing device 10 including the antenna 105.

When the processing device 10 is used, in a case where the authentication unit 102 determines whether the user is a person permitted to use the processing device 10 based on the authentication information acquired by the input unit 101, and determines that the user is not a person permitted to use the processing device 10, the control unit 106 disables the function of the other device 20 connected to the processing device 10 including its own control unit 106 (for example, a bullet or the like to be described later for exterminating a harmful animal cannot be fired).

When the processing device 10 is used, in a case where the authentication unit 102 determines that the user is a person permitted to use the processing device 10 based on the authentication information acquired by the input unit 101, the control unit 106 enables the function of the other device 20 connected to the processing device 10 including its own control unit 106 (for example, a bullet or the like to be described later for exterminating a harmful animal can be fired). However, in a case where the reception unit 103b of the interrogator 103 included in the processing device 10 has received the response signal (that is, a case where the person who possesses the transponder 104 that has transmitted the received response signal exists in the range C), the control unit 106 disables some functions of the other device 20 (for example, a trigger for firing a bullet or the like to be described later for exterminating a harmful animal is caused to be in a state where the trigger cannot be pulled).

In a case where the other device 20 is a gun for exterminating a harmful animal as described later, and the processing device 10 and the other device 20 are connected to cooperate with each other, the antenna 105 included in the processing device 10 is provided at the position of the other device 20 to which the first signal is transmitted in the direction of holding the gun which is the other device 20. That is, the case where the reception unit 103b of the interrogator 103 included in the processing device 10 has received the response signal indicates a state in which the gun, which is the other device 20, is directed to the range C where the person who possesses the transponder 104 that has transmitted the received response signal exists, and the processing in which the control unit 106 disables a part of the functions of the other device 20 prevents erroneous shooting of the person existing in the range C.

### (Configuration of transponder)

Fig. 7 is a diagram illustrating an example of a configuration of the transponder 104 according to an example embodiment of the present disclosure. As illustrated in Fig. 7, the transponder 104 includes a reception unit 104a and a transmission unit 104b. Fig. 7 illustrates the authentication unit 102 and the antenna 105.

As illustrated in Fig. 7, the reception unit 104a includes a comparison unit 104a1, a storage unit 104a2, and a control unit 104a3.

The comparison unit 104a1 compares the first signal (that is, the first signal transmitted from the interrogator 103 of the other processing device 10) received via the antenna 105 with the amplitude threshold for defining the pattern of the first signal stored in the storage unit 104a2. For example, the comparison unit 104a1 compares the SUM signal received via the antenna 105 with the threshold stored in the storage unit 104a2. For example, the comparison unit 104a1 compares the DIFF signal received via the antenna 105 with the threshold stored in the storage unit 104a2. Then, the comparison unit 104a1 outputs the comparison result to the control unit 104a3.

The storage unit 104a2 stores various types of information necessary for processing performed by the reception unit 104a. For example, the storage unit 104a2 stores a threshold used for comparison performed by the comparison unit 104a1. For example, the storage unit 104a2 stores a predetermined signal pattern used for determination processing to be described later performed by the control unit 104a3.

The control unit 104a3 instructs the transmission unit 104b to perform transmission based on the comparison result output by the comparison unit 104a1. For example, the control unit 104a3 determines whether the comparison result matches a predetermined signal pattern stored in the storage unit 104a2. In a case where it is determined that the comparison result matches the predetermined signal pattern stored in the storage unit 104a2, the control unit 104a3 controls the transmission unit 104b to transmit a response signal to the reception of the first signal (for example, the SUM signal and the DIFF signal) generated by the signal generation unit 103a2 matching the predetermined signal pattern to the processing device 10 including the interrogator 103 that has transmitted the first signal. The response signal includes information capable of identifying the processing device 10 including the transponder 104 that has transmitted the response signal.

In a case where it is determined that the comparison result does not match the predetermined signal pattern stored in the storage unit 104a2, the control unit 104a3 performs control not to transmit a response signal to the transmission unit 104b.

Specifically, after adjusting the angle α degrees to adjust the common range C, the interrogator 103 of a certain processing device 10 transmits the signals P1, P2, P3, and P4 illustrated in Fig. 5 to both the range A and the range B. Then, the transponder 104 to which the signal is transmitted receives all of the signals P1, P2, P3, and P4. The comparison unit 104a1 compares each of the signals P1, P2, P3, and P4 received by the transponder 104 with the threshold stored in the storage unit 104a2. The comparison unit 104a1 outputs the comparison result (that is, a signal pattern indicating whether each of the signals P1, P2, P3, and P4 is larger or smaller than a threshold) to the control unit 104a3.

The control unit 104a3 determines whether the received comparison result (that is, the signal pattern) matches the predetermined signal pattern stored in the storage unit 104a2 for both the signal transmitted to the range A by the interrogator 103 of the other processing device 10 and the signal transmitted to the range B. Then, in a case where the control unit 104a3 determines that the comparison result matches the signal pattern of the processing for the signal transmitted to the range A and the comparison result matches the signal pattern of the processing for the signal transmitted to the range B, the control unit determines that the predetermined condition is satisfied. In a case where the control unit 104a3 determines that the comparison result and the signal pattern of processing do not match for the signal transmitted in the range A, or determines that the comparison result and the signal pattern of processing do not match for the signal transmitted in the range B (that is, in a case where it is determined that the comparison result and the signal pattern of the processing do not match for at least one of the signal transmitted to the range A and the signal transmitted to the range B), the control unit determines that the predetermined condition is not satisfied.

The processing performed by the reception unit 104a described above is processing in a case where the authentication unit 102 determines that the user is a person who is permitted to use the processing device 10 when using the processing device 10 based on the authentication information acquired by the input unit 101. In a case where the authentication unit 102 determines that the user is not a person who is permitted to use the processing device 10 when using the processing device 10 based on the authentication information acquired by the input unit 101, the authentication unit stops the processing of the reception unit 104a.

When using the processing device 10, the authentication unit 102 determines that the user is not a person who is permitted to use the processing device 10, and stops the processing of the reception unit 104a, the authentication unit 102 causes the transmission unit 104b to transmit a position signal including position information indicating the position of the processing device 10 including its own authentication unit 102 to the outside of the processing device 10 via the antenna 105.

The transmission unit 104b generates a response signal under the control of the control unit 104a3. The transmission unit 104b transmits the generated response signal to the interrogator 103 via the antenna 105 under the control of the control unit 104a3. The transmission unit 104b transmits the position signal to the outside of the processing device 10 via the antenna 105 under the instruction of the authentication unit 102.

The antenna 105 receives the signal (for example, the SUM signal and the DIFF signal) generated by the signal generation unit 103a2 from the interrogator 103. The antenna 105 transmits the response signal generated by the transmission unit 104b to the interrogator 103. The antenna 105 transmits the position signal to the outside of the processing device 10.

### (Configuration of other device)

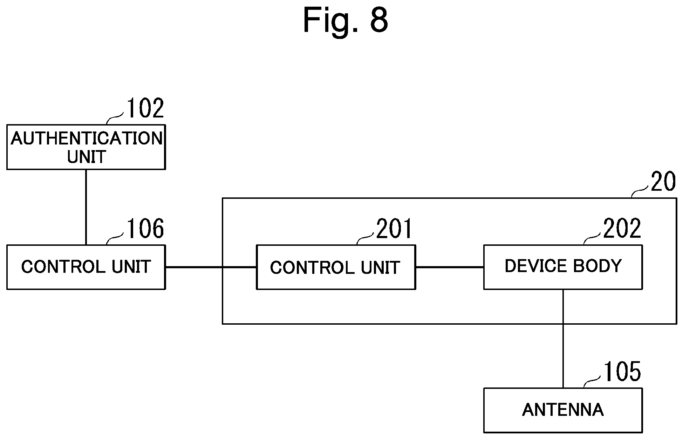

Fig. 8 is a diagram illustrating an example of a configuration of the other device 20 according to some example embodiments of the present disclosure. The other device 20 is, for example, a gun that emits a bullet or the like used for exterminating a harmful animal. The gun includes a pistol and a cannon. As illustrated in Fig. 8, the other device 20 includes a control unit 201 and a device body 202. Fig. 8 illustrates the authentication unit 102, the antenna 105, and the control unit 106 included in the processing device 10 connected to and cooperating with the other device 20.

The control unit 201 controls a state of the device body 202. For example, in a case where the device body 202 is a gun body, the control unit 201 controls the device body 202 to a state in which the trigger can be pulled or a state in which the trigger cannot be pulled. For example, regardless of the state of the trigger, the control unit 201 controls the device body 202 to a state in which a bullet or the like can be fired or a state in which a bullet or the like cannot be fired.

Specifically, in a case where the control unit 106 performs processing of disabling the function of the other device 20 connected to the processing device 10 including its own control unit 106, the control unit 201 controls the device body 202 to a state in which a bullet or the like can be fired or a state in which a bullet or the like cannot be fired regardless of the state of the trigger.

As described above, when the authentication unit 102 uses the processing device 10 based on the authentication information acquired by the input unit 101, in a case where the control unit 106 determines that the user is permitted to use the processing device 10 and performs processing of enabling the function of the other device 20 connected to the processing device 10 including the control unit 106, the control unit 201 controls the device body 202 to a state in which a bullet or the like can be fired according to the state of the trigger. However, in a case where the reception unit 103b of the interrogator 103 included in the processing device 10 receives the response signal, and the control unit 106 performs processing of setting a state in which the trigger cannot be pulled, which is processing of disabling some functions of the other device 20, the control unit 201 controls the device body 202 to a state in which the trigger cannot be pulled.

For example, in a case where the other device 20 is a gun, the device body 202 is a gun body that emits a bullet or the like by a predetermined operation such as pulling a trigger.

### (Processing performed by processing system)

The above-described processing performed by the processing system 1 is an example, and the processing performed by the processing system 1 according to an example embodiment of the present disclosure is not limited to the above-described processing. For example, the processing system 1 may perform processing described below.

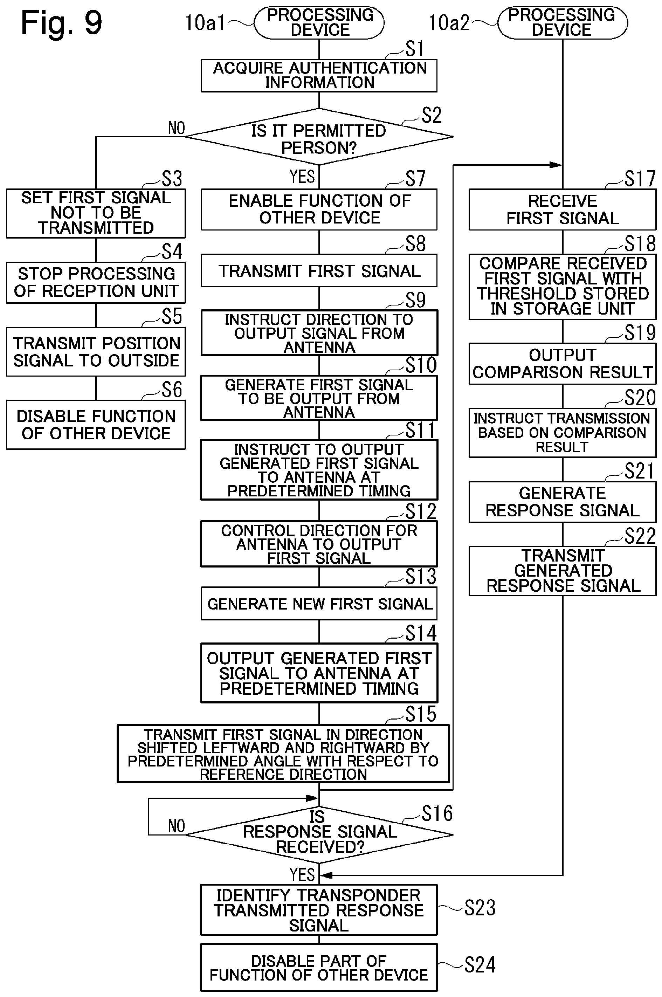

Fig. 9 is a diagram illustrating an example of a processing flow of the processing system 1 according to some example embodiments of the present disclosure. Next, processing performed by the processing system 1 in a case where the processing device 10a1 and the other device 20a1 are connected and cooperate to exterminate a harmful animal will be described with reference to Fig. 9. In a specific example in the following description, it is assumed that the interrogator 103 included in the processing device 10a1 transmits the first signal and the transponder 104 included in the processing device 10a2 receives the first signal. In the following description, in a case where the processing unit included in the processing device 10a2 is not explicitly described, the processing unit is a processing unit included in the processing device 10a1.

A user who uses the processing device 10a1 in cooperation with the other device 20a1 performs a predetermined operation of inputting authentication information to the input unit 101 when using the processing device 10a1. The input unit 101 acquires the authentication information according to a predetermined operation by the user (step S1). The authentication unit 102 determines whether the user is permitted to use the processing device 10a1 when using the processing device 10a1 based on the authentication information acquired by the input unit 101 (step S2).

In a case where it is determined that the user is not authorized to use the processing device 10a1 (NO in step S2), the authentication unit 102 prevents the interrogator 103 from transmitting the first signal (step S3). By the processing in step S3, the interrogator 103 enters a state in which the first signal cannot be transmitted. The authentication unit 102 stops the processing of the reception unit 104a (step S4). The authentication unit 102 causes the transmission unit 104b to transmit a position signal including position information indicating the position of the processing device 10a1 to the outside of the processing device 10a1 via the antenna 105 (step S5). In a case where the position signal transmitted by the processing in step S5 is received, the position of the processing device 10a1 that is intended to be used by a person whose use is not permitted can be specified from the position information included in the position signal. That is, the theft can be prevented by the processing in step S5.

In a case where the authentication unit 102 determines that the user is not authorized to use the processing device 10a1 (NO in Step S2), the control unit 106 disables the function of the other device 20a1 connected to the processing device 10a1 (Step S6). For example, the control unit 106 causes the other device 20a1 to be in a state of being incapable of firing a bullet or the like for exterminating a harmful animal. By the processing in step S6, the person who is not permitted to use cannot use the other device 20a1 linked with the processing device 10a1. That is, in the case of the other device 20a1 that can operate only in cooperation with the processing device 10a1, unauthorized use of the other device 20a1 by a person who is not permitted to use can be prevented by the processing of step S6.

In a case where the authentication unit 102 determines that the user is a person who is permitted to use the processing device 10 (YES in Step S2), the control unit 106 enables the function of the other device 20a1 connected to the processing device 10a1 (Step S7). For example, the control unit 106 causes the other device 20a1 to be in a state capable of firing a bullet or the like for exterminating a harmful animal. However, as will be described later in processing, in a case where the reception unit 103b receives a response signal (that is, the case where the person who possesses the transponder 104 included in the processing device 10a2 that has transmitted the received response signal exists in the range C), the control unit 106 disables some functions of the other device 20. For example, the control unit 106 causes the other device 20a1 to be in a state in which a trigger for firing a bullet or the like for exterminating a harmful animal cannot be pulled.

In a case where it is determined that the user is authorized to use the processing device 10a1 (YES in step S2), the authentication unit 102 causes the interrogator 103 to transmit the first signal via the antenna 105 (step S8). Here, the processing in step S8 in which the authentication unit 102 causes the interrogator 103 to transmit the first signal via the antenna 105 may be executed in a case where it is determined that the user has held the other device 20 in a certain direction. For example, in a case where the other device 20 includes a sensor such as an acceleration sensor or a gyro sensor, and a value of the sensor indicates that the other device 20 is within a range of a predetermined posture (for example, within a range of a predetermined angle close to horizontal), the authentication unit 102 may execute the processing of step S8.

In response to the processing in step S8, the first control unit 103a1 instructs the second control unit 103a3 to output the first signal from the antenna 105 (step S9).

The first control unit 103a1 causes the signal generation unit 103a2 to generate the first signal to be output from the antenna 105 (step S10). Examples of the first signal that the first control unit 103a1 causes the signal generation unit 103a2 to generate include a SUM signal and a DIFF signal.

The first control unit 103a1 instructs the signal generation unit 103a2 to output the generated first signal to the antenna 105 at a predetermined timing (step S11). For example, the first control unit 103a1 instructs the signal generation unit 103a2 to output the generated SUM signal to the antenna 105 at a first timing. For example, the first control unit 103a1 instructs the signal generation unit 103a2 to output the generated DIFF signal to the antenna 105 at a second timing that is a predetermined time after the first timing.

The second control unit 103a3 controls the direction in which the antenna 105 outputs the first signal in response to an instruction from the first control unit 103a1 (step S12). For example, in a case where the antenna 105 is an array antenna, the irradiation direction of the first signal is shifted leftward or rightward by a predetermined angle (for example, α degrees) with respect to the reference direction by controlling the phase of the first signal for each antenna element.

The signal generation unit 103a2 generates the first signal in response to an instruction from a new first control unit 103a1 (step S13). Then, the signal generation unit 103a2 outputs the generated first signal to the antenna 105 at a predetermined timing in response to an instruction from the first control unit 103a1 (step S14).

Under the control of the second control unit 103a3, the antenna 105 transmits the first signal to the transponder 104 in a direction shifted leftward or rightward by a predetermined angle with respect to the reference direction (that is, in at least two different ranges) (step S15).

The reception unit 103b determines whether a response signal has been received via the antenna 105 (step S16). In a case where it is determined that the response signal is not received (NO in step S16), the reception unit 103b returns to the processing in step S16. In a case where it is determined that the response signal has been received (YES in step S16), the reception unit 103b proceeds to the processing of step S23 described later.

The comparison unit 104a1 included in the processing device 10a2 receives the first signal from the interrogator 103 via the antenna 105 included in the processing device 10a2 (step S17). The comparison unit 104a1 included in the processing device 10a2 compares the received first signal with the threshold stored in the storage unit 104a2 included in the processing device 10a2 (step S18). For example, the comparison unit 104a1 included in the processing device 10a2 compares the SUM signal received via the antenna 105 included in the processing device 10a2 with the threshold stored in the storage unit 104a2 included in the processing device 10a2. For example, the comparison unit 104a1 included in the processing device 10a2 compares the DIFF signal received via the antenna 105 included in the processing device 10a2 with the threshold stored in the storage unit 104a2 included in the processing device 10a2. Then, the comparison unit 104a1 included in the processing device 10a2 outputs the comparison result to the control unit 104a3 included in the processing device 10a2 (step S19).

The control unit 104a3 included in the processing device 10a2 instructs the transmission unit 104b included in the processing device 10a2 to transmit based on the comparison result output by the comparison unit 104a1 included in the processing device 10a2 (step S20). For example, the control unit 104a3 included in the processing device 10a2 determines whether the determination result included in the processing device 10a2 matches a predetermined signal pattern stored in the storage unit 104a2. In a case where it is determined that the comparison result matches the predetermined signal pattern stored in the storage unit 104a2 included in the processing device 10a2, the control unit 104a3 included in the processing device 10a2 controls the transmission unit 104b included in the processing device 10a2 to transmit, to the interrogator 103, a response signal to reception of a signal (for example, the SUM signal and the DIFF signal) generated by the signal generation unit 103a2 matching the predetermined signal pattern.

The transmission unit 104b included in the processing device 10a2 generates a response signal under the control of the control unit 104a3 included in the processing device 10a2 (step S21). The transmission unit 104b included in the processing device 10a2 transmits the generated response signal to the interrogator 103 via the antenna 105 included in the processing device 10a2 under the control of the control unit 104a3 included in the processing device 10a2 (step S22).

**In** this case, the reception unit 103b determines that the response signal transmitted by the transponder 104 included in the processing device 10a2 is received via the antenna 105 (YES in step S16).

Then, the reception unit 103b identifies the transponder 104 included in the processing device 10a2 that has transmitted the received response signal (step S23). With this identification, it is possible to recognize that a specific person who possesses the transponder 104 included in the processing device 10a2 exists in the range C. **In** the processing of step S20, in a case where the control unit 104a3 included in the processing device 10a2 determines that the comparison result does not match the predetermined signal pattern stored in the storage unit 104a2 included in the processing device 10a2, the control unit 104a3 performs control not to cause the interrogator 103 to transmit the response signal to the transmission unit 104b included in the processing device 10a2.

Then, the control unit 104a3 included in the processing device 10a2 returns to the processing of step S17 (that is, the transponder 104 included in the processing device 10a2 returns to the first processing).

**In** a case where the reception unit 103b of the interrogator 103 has received the response signal (that is, the case where the person who possesses the transponder 104 included in the processing device 10a2 that has transmitted the received response signal exists in the range C), the control unit 106 disables a part of the functions of the other device 20 (step S24). For example, the control unit 106 causes the other device 20 to be in a state in which a trigger for firing a bullet or the like for exterminating a harmful animal cannot be pulled. With the processing in step S24, in a case where a person exists in the range C described with reference to Fig. 5, it is possible to prevent the user from erroneously shooting the person from the other device 20.

### (Advantages)

The processing system 1 according to the example embodiment of the present disclosure has been described above. The processing device 10 included in the processing system 1 is a processing device that can cooperate with the other device 20 by being connected to the other device 20. In the processing device 10, the authentication unit 102 (an example of a determination means) determines whether the user is a person who is permitted to use the processing device 10 when using the processing device 10. The authentication unit 102 (an example of a setting means) enables the first function which is a function for identifying a person of the processing device 10 in a case where it is determined that the user is a person who is permitted to use the processing device 10, and disables the first function in a case where it is determined that the user is not a person who is permitted to use the processing device 10. In a case where the first function is disabled, the authentication unit 102 causes the processing device 10 to output a signal for enabling tracking of the processing device 10. With the processing device 10, it is possible to identify a person and to take measures against theft.

### <Modification of example embodiment>

### (Configuration of processing system)

A processing system 1 according to a modification of an example embodiment of the present disclosure will be described with reference to the drawings. In the processing system 1, the transponder 104 determines whether a predetermined condition is satisfied with respect to a first signal transmitted from the interrogator 103 included in a processing device 10 different from the processing device 10 including its own transponder 104 and a second signal transmitted from the interrogator 103 different from the first signal, and transmits a response signal indicating a response to the first signal and the second signal to the interrogator 103 in a case where it is determined that the predetermined condition is satisfied. Specifically, the transponder 104 determines whether a predetermined condition is satisfied based on a difference between a first signal intensity that is a received signal intensity of the first signal transmitted by the interrogator 103 included in a processing device 10 different from the processing device 10 including its own transponder 104 and a second signal intensity that is a received signal intensity of a second signal transmitted by the interrogator 103, and transmits a response signal to the first signal and the second signal to the interrogator 103 in a case where it is determined that the predetermined condition is satisfied.

Similarly to the processing system 1 according to an example embodiment of the present disclosure, the processing system 1 includes a processing device 10 and a transponder 104.

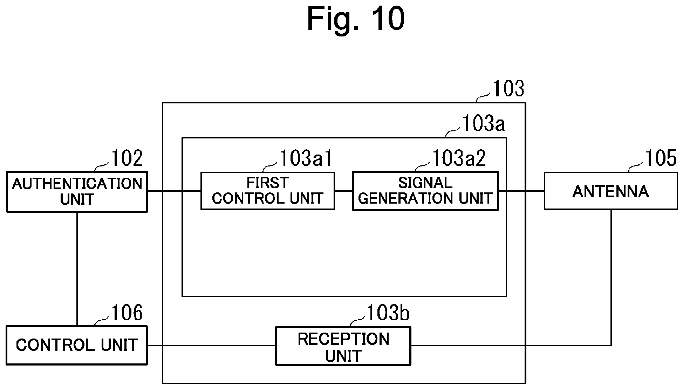

The processing device 10 includes an interrogator 103. Fig. 10 is a diagram illustrating an example of a configuration of an interrogator 103 according to an example embodiment of the present disclosure. As illustrated in Fig. 10, the interrogator 103 includes a transmission unit 103a and a reception unit 103b. Fig. 10 illustrates the authentication unit 102, the antenna 105, and the control unit 106.

As illustrated in Fig. 10, the transmission unit 103a includes a first control unit 103al, and a signal generation unit 103a2. However, the processing performed by each of the first control unit 103a1 and the signal generation unit 103a2 is different from that of the transmission unit 103a according to the example embodiment of the present disclosure.

The first control unit 103a1 instructs the signal generation unit 103a2 to generate a difference between signal levels of two signals (for example, the SUM signal and the DIFF signal) output from the antenna 105 and two signals that achieve the difference.

The first control unit 103a1 instructs the signal generation unit 103a2 to output the generated signal to the antenna 105 at a predetermined timing. For example, the first control unit 103a1 instructs the signal generation unit 103a2 to output the generated SUM signal to the antenna 105 at a first timing. For example, the first control unit 103a1 instructs the signal generation unit 103a2 to output the generated DIFF signal to the antenna 105 at a second timing that is a predetermined time after the first timing.

The signal generation unit 103a2 generates a signal in response to an instruction from the first control unit 103a1. The signal generation unit 103a2 outputs the generated signal to the antenna 105 at a predetermined timing in response to an instruction from the first control unit 103al.

For example, in response to an instruction from the first control unit 103a1, the signal generation unit 103a2 generates information indicating a difference between signal levels of two signals (for example, the SUM signal and the DIFF signal) and a SUM signal that achieves the difference. Then, the signal generation unit 103a2 transmits the information indicating the difference between the generated signal levels and the SUM signal to the transponder 104 via the antenna 105. The signal generation unit 103a2 generates a DIFF signal that achieves the difference in response to an instruction from the first control unit 103a1. Then, the signal generation unit 103a2 transmits the generated DIFF signal to the transponder 104 via the antenna 105.

The antenna 105 is an antenna capable of transmitting a signal in a predetermined direction. For example, the antenna 105 is an array antenna. However, the antenna 105 is not limited to the array antenna.

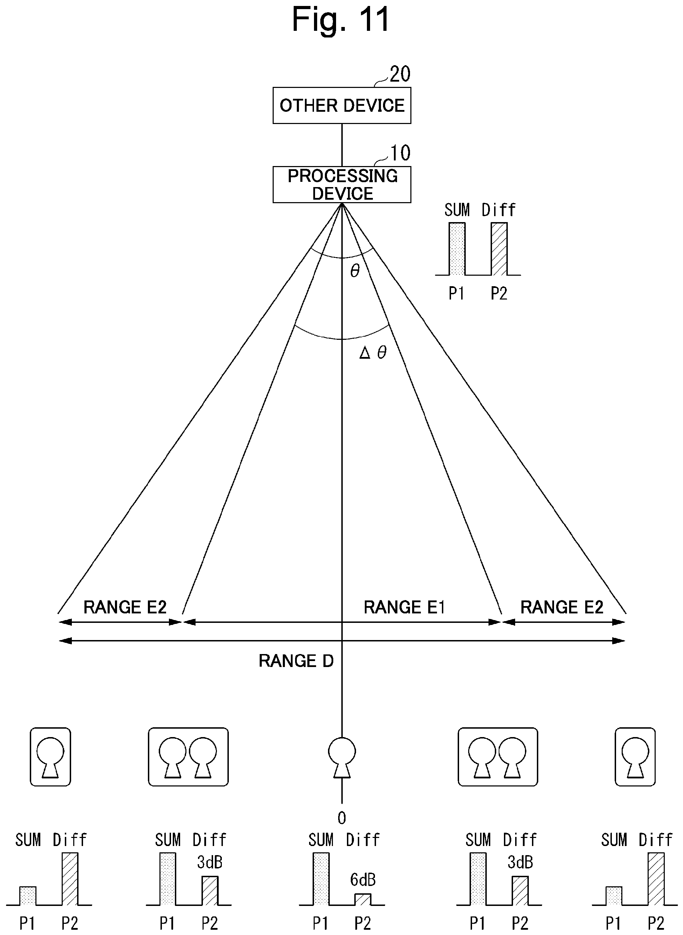

Fig. 11 is a diagram illustrating an example of reception power of the transponder 104 for the SUM signal and the DIFF signal transmitted by the antenna 105 according to an example embodiment of the present disclosure. Even if the interrogator 103 transmits the SUM signal and the DIFF signal with the same signal intensity, the received signal intensity of the SUM signal received by the transponder 104 within the range of the angle θ is larger than the received signal intensity of the DIFF signal, but the received signal intensity of the SUM signal and the received signal intensity of the DIFF signal gradually approach each other as going away from the direction of the angle indicated by 0 as a reference. Then, outside the range of the angle θ, the received signal intensity of the SUM signal is smaller than the received signal intensity of the DIFF signal. "0" in Fig. 11 indicates a reference direction. The angle θ in Fig. 11 indicates a range D in which the reception power of the SUM signal is larger than the reception power of the DIFF signal.

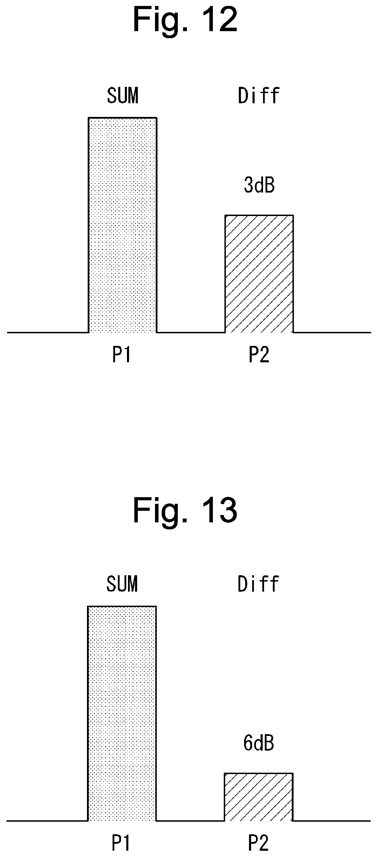

Fig. 12 is a diagram illustrating a first example of a difference in reception power between the SUM signal and the DIFF signal received by the transponder 104 according to an example embodiment of the present disclosure. Fig. 13 is a diagram illustrating a second example of a difference in reception power between the SUM signal and the DIFF signal received by the transponder 104 according to the example embodiment of the present disclosure. For example, Fig. 13 illustrates an example (in this example, 6 dB or more) of the difference between the reception powers of the SUM signal and the DIFF signal received by the transponder 104 in the range of the angle Δθ (that is, a range E1 in the range D) illustrated in Fig. 11. For example, Fig. 12 illustrates an example of a difference in reception power between the SUM signal and the DIFF signal received by the transponder 104 (3 dB or more and less than 6dB in this example) in the range of the angle Δθ (that is, the range E2 in the range D) in the range of the angle θ illustrated in Fig. 11. The signal generation unit 103a2 of the interrogator 103 can arbitrarily set the same signal intensity of the SUM signal and the DIFF signal in response to the instruction from the first control unit 103a1, and can narrow one of the range E1 and the range E2 to the range in the case of the same signal intensity of the SUM signal and the DIFF signal and widen the other to the range in the case of the same signal intensity of the SUM signal and the DIFF signal by setting the difference between the received signal intensities of the SUM signal and the DIFF signal received by the transponder 104 to a desired difference. That is, the signal generation unit 103a2 of the interrogator 103 can set an arbitrary range in which the difference between the two signals is a desired difference in response to an instruction from the first control unit 103a1.

For example, it is assumed that the signal generation unit 103a2 transmits two signals (that is, the SUM signal and the DIFF signal) having a difference of 3dB in the received signal intensity between the SUM signal and the DIFF signal received by the transponder 104 to the transponder 104 via the antenna 105 as illustrated in Fig. 12 in response to an instruction from the first control unit 103a1. Then, in this case, it is assumed that two signals are received and a range having a difference of 3dB or more is the range D in Fig. 11. Here, it is assumed that the signal generation unit 103a2 transmits two signals (that is, the SUM signal and the DIFF signal) having a difference of 6dB in the received signal intensity between the SUM signal and the DIFF signal received by the transponder 104 to the transponder 104 via the antenna 105 as illustrated in Fig. 13 in response to an instruction from the first control unit 103a1. In this case, two signals are received, and a range having a difference of 6dB or more is the range E1 indicated by an angle Δθ narrower than the range D indicated by an angle θ in Fig. 11.

The reception unit 103b receives the response signal transmitted by the transponder 104 via the antenna 105. The reception unit 103b specifies the transponder 104 that has transmitted the received response signal. With this specification, it is possible to recognize that a specific person who possesses the transponder 104 exists, for example, in the range E1 or the like.

Each of the transponders 104 includes a reception unit 104a and a transmission unit 104b, similarly to the transponder 104 according to the example embodiment of the present disclosure.

Similarly to the reception unit 104a according to the example embodiment of the present disclosure, the reception unit 104a includes a comparison unit 104a1, a storage unit 104a2, and a control unit 104a3. However, the processing performed by each of the comparison unit 104a1, the storage unit 104a2, and the control unit 104a3 is different from that of the reception unit 104a according to the example embodiment of the present disclosure.

The comparison unit 104a1 compares the received signal intensities of the two signals (for example, the SUM signal and the DIFF signal) received from the interrogator 103 via the antenna 105. For example, the comparison unit 104a1 writes, into the storage unit 104a2, a threshold indicating a difference to be compared with a difference between signal levels of two signals received via the antenna 105. The comparison unit 104a1 writes the SUM signal and the DIFF signal received via the antenna 105 into the storage unit 104a2. Then, the comparison unit 104a1 compares the received signal intensity of the SUM signal with the received signal intensity of the DIFF signal. The comparison unit 104a1 determines whether the comparison result of the received signal intensities is larger than a threshold indicating a difference. The comparison unit 104a1 outputs the determination result to the control unit 104a3.

The storage unit 104a2 stores various types of information necessary for processing performed by the reception unit 104a. For example, the storage unit 104a2 stores a threshold indicating a difference to be compared with a difference between signal levels of two signals received by the comparison unit 104a1 via the antenna 105. The storage unit 104a2 stores the SUM signal and the DIFF signal received by the comparison unit 104a1 via the antenna 105.

The control unit 104a3 instructs the transmission unit 104b to perform transmission based on the determination result output by the comparison unit 104a1. For example, in a case where the determination result obtained by comparing the received signal intensities is a determination result indicating that the determination result is larger than the threshold indicating the difference, the control unit 104a3 controls the transmission unit 104b to transmit a response signal to the interrogator 103 in response to reception of the signal (that is, the SUM signal and the DIFF signal) generated by the signal generation unit 103a2. The response signal includes information capable of identifying the processing device 10 including the transponder 104 that has transmitted the response signal.

The antenna 105 receives the signal (that is, the SUM signal and the DIFF signal) generated by the signal generation unit 103a2 from the interrogator 103. The antenna 105 transmits the response signal generated by the transmission unit 104b to the interrogator 103.

The transmission unit 104b generates a response signal under the control of the control unit 104a3. The transmission unit 104b transmits the generated response signal to the interrogator 103 via the antenna 105 under the control of the control unit 104a3.

### (Processing performed by processing system)

The above-described processing performed by the processing system 1 is an example, and the processing performed by the processing system 1 according to the modification of the example embodiment of the present disclosure is not limited to the above-described processing. For example, the processing system 1 may perform processing described below.

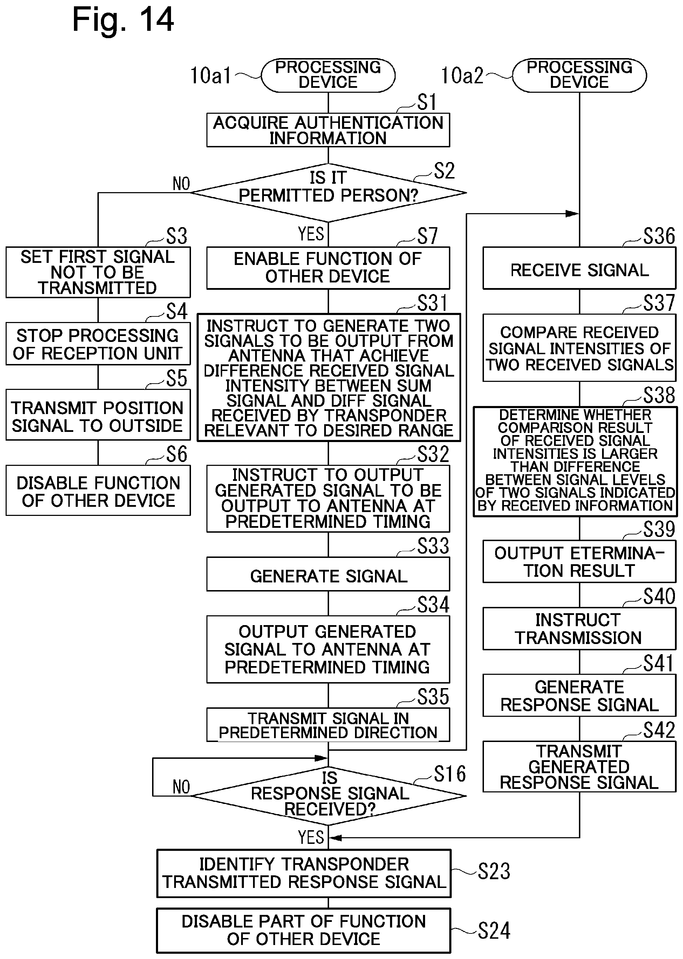

Fig. 14 is a diagram illustrating an example of a processing flow of the processing system 1 according to a modification of an example embodiment of the present disclosure. Next, processing in which, in the processing system 1, the interrogator 103 transmits two signals (for example, the SUM signal and the DIFF signal) having the same amplitude, and the transponder 104 responds by transmitting a response signal in a case where a difference between the received signal intensities of the signals satisfies a predetermined condition will be described with reference to Fig. 14.

The processing system 1 performs the processing of steps S1 to S7. The first control unit 103a1 instructs the signal generation unit 103a2 to generate two signals (that is, the SUM signal and the DIFF signal) output from the antenna 105 that achieve a difference in the received signal intensity between the SUM signal and the DIFF signal received by the transponder 104 relevant to a desired range (for example, a range indicated by Δθ illustrated in Fig. 11) (step S31). The first control unit 103a1 instructs the signal generation unit 103a2 to output the generated signal to the antenna 105 at a predetermined timing (step S32). For example, the first control unit 103a1 instructs the signal generation unit 103a2 to output the generated SUM signal to the antenna 105 at a first timing. For example, the first control unit 103a1 instructs the signal generation unit 103a2 to output the generated DIFF signal to the antenna 105 at a second timing that is a predetermined time after the first timing.

The signal generation unit 103a2 generates a signal in response to an instruction from the first control unit 103a1 (step S33). The signal generation unit 103a2 outputs the generated signal to the antenna 105 at a predetermined timing in response to an instruction from the first control unit 103a1 (step S34).

The antenna 105 transmits a signal in a predetermined direction (step S35).

The reception unit 103b determines whether a response signal has been received via the antenna 105 (step S16). In a case where it is determined that the response signal is not received (NO in step S16), the reception unit 103b returns to the processing in step S16. In a case where it is determined that the response signal has been received (YES in step S16), the reception unit 103b proceeds to the processing of step S23 described later.

The comparison unit 104a1 receives a signal from the interrogator 103 via the antenna 105 (step S36). The comparison unit 104a1 compares the received signal intensities of the two signals received from the interrogator 103 via the antenna 105 (step S37). For example, the comparison unit 104a1 writes, into the storage unit 104a2, a threshold indicating a difference to be compared with a difference between signal levels of two signals received via the antenna 105. The comparison unit 104a1 writes the SUM signal and the DIFF signal received via the antenna 105 into the storage unit 104a2. Then, the comparison unit 104a1 compares the received signal intensity of the SUM signal with the received signal intensity of the DIFF signal. The comparison unit 104a1 determines whether the comparison result of the received signal intensities is larger than a threshold indicating a difference (step S38). The comparison unit 104a1 outputs the determination result to the control unit 104a3 (step S39).

The control unit 104a3 instructs the transmission unit 104b to perform transmission based on the determination result output by the comparison unit 104a1 (step S40). For example, in a case where the determination result is a determination result indicating that the determination result is larger than the threshold indicating the difference, the control unit 104a3 controls the transmission unit 104b to transmit a response signal to the interrogator 103 in response to reception of the signal generated by the signal generation unit 103a2. The response signal includes information capable of identifying the transponder 104 that has transmitted the response signal.

The transmission unit 104b generates a response signal under the control of the control unit 104a3 (step S41). The transmission unit 104b transmits the generated response signal to the interrogator 103 via the antenna 105 under the control of the control unit 104a3. (step S42).

In this case, the reception unit 103b determines that the response signal transmitted by the transponder 104 included in the processing device 10a2 is received via the antenna 105 (YES in step S16).

Then, the processing system 1 performs the processing of steps S23 to S24.

### (Advantages)

The processing system 1 according to the modification of the example embodiment of the present disclosure has been described above. In the transponder 104 included in the processing device 10 of the processing system 1, the control unit 104a3 determines whether the comparison result between the first signal intensity and the second signal intensity is larger than the difference between the predetermined signal levels based on the difference between the first signal intensity that is the received signal intensity of the SUM signal (an example of the first signal) transmitted by the interrogator 103 and the second signal intensity that is the received signal intensity of the DIFF signal (an example of the second signal) transmitted by the interrogator 103. In a case where the control unit 104a3 determines that the comparison result between the first signal intensity and the second signal intensity is larger than the difference between the predetermined signal levels, the transmission unit 104b transmits a response signal indicating a response to the signal generated by the signal generation unit 103a2 to the interrogator 103. By changing the value of the information indicating the difference between the signal levels by the transponder 104, the range of the response region can be made variable.

The processing system 1 according to another modification of the example embodiment of the present disclosure may include all the processing units included in the processing system 1 according to the example embodiment of the present disclosure and all the processing units included in the processing system 1 according to the modification of the example embodiment of the present disclosure. Then, the processing system 1 may perform both the processing of determining whether the first signal described in the example embodiment of the present disclosure is transmitted and the response signal is received and the processing of determining whether the first signal and the second signal described in the modification of the example embodiment of the present disclosure are transmitted and the response signal is received. Then, in the processing system 1, in a case where the transponder 104 to respond is reliably caused to respond, the transponder 104 determined to match the signal pattern of the processing in at least one of the determination processing described in the example embodiment of the present disclosure and the determination processing described in the modification of the example embodiment of the present disclosure may respond to the interrogator 103. In a case where the processing system 1 does not reliably cause the transponder 104 that should not respond to respond, the transponder 104 determined to match the signal patterns of the processing in both the determination processing described in the example embodiment of the present disclosure and the determination processing described in the modification of the example embodiment of the present disclosure may respond to the interrogator 103.

This is based on the idea that the accuracy of the determination processing described in the example embodiment of the present disclosure and the accuracy of the determination processing described in the modification of the example embodiment of the present disclosure change from moment to moment, and thus erroneous determination is less likely to occur by using the determination results of both types of processing.

In each example embodiment of the present disclosure, a specific example of the other device 20 has been described as a gun. However, in another modification of each example embodiment of the present disclosure, the other device 20 may be a drone. The drone may fire a bullet or the like so as to exterminate or drive away a harmful animal.

In each example embodiment of the present disclosure, the processing device 10 has been described as being connected to the other device 20. However, in this modification of each example embodiment of the present disclosure, the processing device 10 may not be connected to the other device 20. In this case, the processing device 10 cannot cooperate with the other device 20, but can determine whether a person exists according to the response signal by transmitting a signal from the interrogator 103. Since the processing device 10 can transmit the response signal to the signal transmitted from the interrogator 103 included in another processing device 10, it is possible to prevent erroneous fire from the others. Furthermore, the functions included as security measures can be used as they are.

In each example embodiment of the present disclosure, the processing device 10 has been described as including both the interrogator 103 and the transponder 104. However, in another modification of each example embodiment of the present disclosure, the processing device 10 may include one of the interrogator 103 or the transponder 104.

For example, in a case where there is one person who possesses the other device 20, the other person does not erroneously shoot even if the processing device 10 included in the one person does not include the transponder 104. Therefore, it is sufficient that the one person does not erroneously shoot another person. Therefore, if the person other than the one person possesses the processing device 10 including the transponder 104 and not including the interrogator 103, and the one person possesses the processing device 10 including the interrogator 103 and not including the transponder 104, it is possible to prevent the one person from erroneously firing the person other than the one person.

In the processing system 1 of each example embodiment of the present disclosure described above, it has been described that, when the processing device 10 is used, in a case where the authentication unit 102 determines whether the user is a person permitted to use the processing device 10 based on the authentication information acquired by the input unit 101, and determines that the user is not a person permitted to use the processing device 10, the control unit 106 disables the function of the other device 20 connected to the processing device 10 including its own control unit 106 (for example, a bullet or the like to be described later for exterminating a harmful animal cannot be fired). However, in the processing system 1 according to another modification of each example embodiment of the present disclosure, the control unit 106 may disable the function of the other device 20 connected to the processing device 10 including its own control unit 106 when the processing device 10 is used, in a case where the authentication unit 102 determines whether the user is a person permitted to use the processing device 10 based on the authentication information acquired by the input unit 101, and determines that the user is not a person permitted to use the processing device 10.

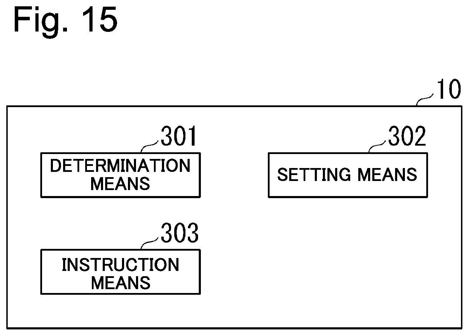

Fig. 15 is a diagram illustrating an example of a configuration of the processing device 10 according to some example embodiments of the present disclosure. As illustrated in Fig. 15, the processing device 10 includes a determination means 301, a setting means 302, and an instruction means 303.

The processing device 10 is a processing device that can cooperate with another device by being connected to the other device. The determination means 301 determines whether the user is permitted to use the processing device when using the processing device. The setting means 302 enables a first function that is a function for identifying a person of the processing device in a case where the determination means 301 determines that the user is a person who is permitted to use the processing device, and disables the first function in a case where the determination means 301 determines that the user is not a person who is permitted to use the processing device. In a case where the setting means 302 disables the first function, the instruction means 303 causes the processing device to output a signal for enabling tracking of the processing device.

Each of the determination means 301, the setting means 302, and the instruction means 303 can be achieved, for example, by using a function of the authentication unit 102 illustrated in Fig. 3 and the like.

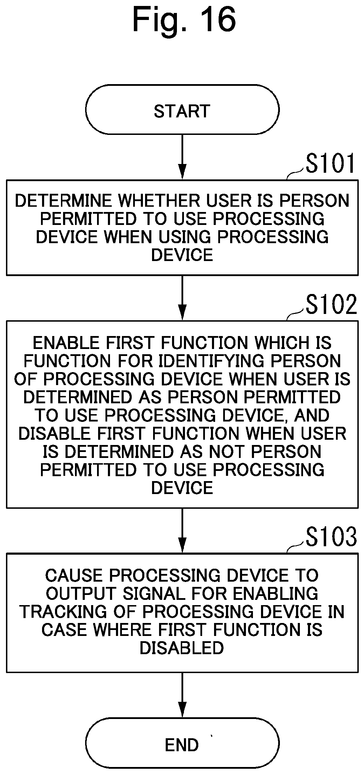

Fig. 16 is a diagram illustrating an example of a processing flow of the processing device 10 according to some example embodiments of the present disclosure. Next, processing of the processing device 10 according to some example embodiments of the present disclosure will be described with reference to Fig 16.

In the processing device 10 that can cooperate with other device by being connected to the other device, the determination means 301 determines whether the user is a person who is permitted to use the processing device when the processing device is used (step S101). The setting means 302 enables a first function that is a function for identifying a person of the processing device in a case where the determination means 301 determines that the user is a person who is permitted to use the processing device, and disables the first function in a case where the determination means 301 determines that the user is not a person who is permitted to use the processing device (step S102). In a case where the setting means 302 disables the first function, the instruction means 303 causes the processing device to output a signal for enabling tracking of the processing device (step S103).

The processing device 10 according to some example embodiments of the present disclosure has been described above. With the processing device 10, it is possible to identify a person and to take measures against theft.

The order of processing in the example embodiments of the present disclosure may be changed within a range in which appropriate processing is performed.

Although the example embodiments of the present disclosure have been described, each of the processing system 1, the processing device 10, the interrogator 103, and the transponder 104 described above, and other control devices may include a computer system therein. Then, the procedure of the above-described processing is stored in a computer-readable recording medium in the form of a program, and the above-described processing is performed by the computer reading and executing the program. A specific example of the computer will be described below.

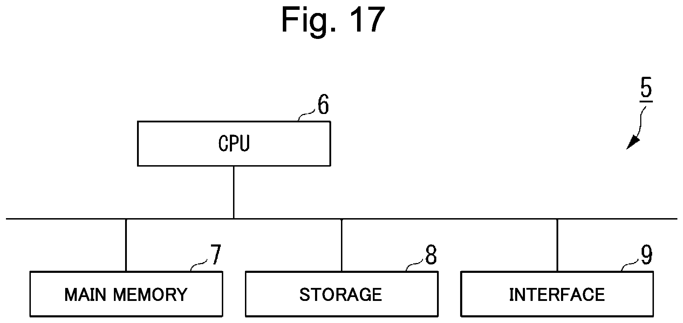

Fig. 17 is a schematic block diagram illustrating a configuration of a computer according to at least one example embodiment. As illustrated in Fig. 17, the computer 5 includes a central processing unit (CPU) 6, a main memory 7, a storage 8, and an interface 9.

For example, each of the processing system 1, the processing device 10, the interrogator 103, and the transponder 104 described above, and each of the other control devices are implemented in the computer 5. Then, the operation of each processing unit described above is stored in the storage 8 in the form of a program. The CPU 6 reads the program from the storage 8, develops the program in the main memory 7, and executes the above processing according to the program. The CPU 6 secures a storage area relevant to each of the above-described storage units in the main memory 7 according to the program.

Examples of the storage 8 include a hard disk drive (HDD), a solid state drive (SSD), a magnetic disk, a magneto-optical disk, a compact disc read only memory (CD-ROM), a digital versatile disc read only memory (DVD-ROM), a semiconductor memory, and the like. The storage 8 may be an internal medium directly connected to the bus of the computer 5 or an external medium connected to the computer 5 via the interface 9 or a communication line. In a case where the program is distributed to the computer 5 through a communication line, the computer 5 that has received the distribution may expand the program in the main memory 7 and execute the above processing. In at least one example embodiment, the storage 8 is a non-transitory tangible storage medium.

The program may achieve a part of the functions described above. Furthermore, the program may be a file that can implement the above-described functions in combination with a program already recorded in the computer system, that is, a so-called difference file (difference program).

Although some example embodiments of the present disclosure have been described, these example embodiments are examples and do not limit the scope of the disclosure. Various additions, omissions, substitutions, and changes may be made to these example embodiments without departing from the gist of the disclosure.

Some or all of the above example embodiments may be denoted as the following Supplementary Notes, but are not limited to the following.

### (Supplementary Note 1)

A processing device capable of cooperating with another device by being connected to the other device, the processing device including:
a determination means for determining whether a user is a person who is permitted to use the processing device when using the processing device;
a setting means for enabling a first function that is a function for identifying a person of the processing device in a case where the determination means determines that the user is a person who is permitted to use the processing device, and disables the first function in a case where the determination means determines that the user is not a person who is permitted to use the processing device; and
an instruction means for causing the processing device to output a signal for enabling tracking of the processing device in a case where the setting means disables the first function.

### (Supplementary Note 2)

The processing device according to Supplementary Note 1, including:
a first output control means for, in a case where the setting means enables the first function, causing the processing device to output a first signal that is a signal for identifying the person toward a first range at a first timing, and causing the processing device to output the first signal toward a second range having a range overlapping with the first range at a second timing after a predetermined time has elapsed from the first timing.

### (Supplementary Note 3)

The processing device according to Supplementary Note 2, in which
the first output control means determines
the first range and the second range such that the overlapping range includes the person to be specified by the processing device.

### (Supplementary Note 4)

The processing device according to Supplementary Note 3, in which
the first output control means narrows down
at least one of the first range and the second range.

### (Supplementary Note 5)

The processing device according to any one of Supplementary Notes 1 to 4, including
a second output control means for outputting, to the other device, a signal for enabling a second function that is a predetermined function of the other device in a case where the processing device is connected to the other device and the determination means determines that the user is not a person permitted to use the processing device.

### (Supplementary Note 6)

A processing system including:
the processing device according to any one of Supplementary Notes 1 to 5; and
the other device capable of cooperating with the processing device by being connected to the processing device.

### (Supplementary Note 7)

A processing method performed by a processing device capable of cooperating with another device by being connected to the other device, the processing method including:
determining whether a user is a person who is permitted to use the processing device when using the processing device;
enabling a first function that is a function for identifying a person of the processing device in a case where the user is determined as a person who is permitted to use the processing device, and disables the first function in a case where the user is determined as not a person who is permitted to use the processing device; and
causing the processing device to output a signal for enabling tracking of the processing device in a case where the first function is disabled.

### (Supplementary Note 8)

The processing method according to Supplementary Note 7, further including,
in a case where the first function is enabled, causing the processing device to output a first signal that is a signal for identifying the person toward a first range at a first timing, and causing the processing device to output the first signal toward a second range having a range overlapping with the first range at a second timing after a predetermined time has elapsed from the first timing.

### (Supplementary Note 9)

The processing method according to Supplementary Note 8, further including,
determining the first range and the second range such that the overlapping range includes the person to be specified by the processing device.

### (Supplementary Note 10)

The processing method according to Supplementary Note 9, further including
narrowing down at least one of the first range and the second range.

### (Supplementary Note 11)

The processing method according to any one of Supplementary Notes 7 to 10, further including
outputting, to the other device, a signal for enabling a second function that is a predetermined function of the other device in a case where the processing device is connected to the other device and the user is determined as not a person permitted to use the processing device.

### (Supplementary Note 12)

A program for causing
a computer of a processing device capable of cooperating with another device by being connected to the other device to execute:
determining whether a user is a person who is permitted to use the processing device when using the processing device;
enabling a first function that is a function for identifying a person of the processing device in a case where the user is determined as a person who is permitted to use the processing device, and disables the first function in a case where the user is determined as not a person who is permitted to use the processing device; and
causing the processing device to output a signal for enabling tracking of the processing device in a case where the first function is disabled.

### (Supplementary Note 13)

The program according to Supplementary Note 12 for causing the computer to execute,
in a case where the first function is enabled, causing the processing device to output a first signal that is a signal for identifying the person toward a first range at a first timing, and causing the processing device to output the first signal toward a second range having a range overlapping with the first range at a second timing after a predetermined time has elapsed from the first timing.

### (Supplementary Note 14)

The program according to Supplementary Note 13 for causing the computer to execute
determining the first range and the second range such that the overlapping range includes the person to be specified by the processing device.

### (Supplementary Note 15)

The program according to Supplementary Note 14 for causing the computer to execute
narrowing down at least one of the first range and the second range.

### (Supplementary Note 16)

The program according to any one of Supplementary Notes 12 to 15 for causing the computer to execute
outputting, to the other device, a signal for enabling a second function that is a predetermined function of the other device in a case where the processing device is connected to the other device and the user is determined as not a person permitted to use the processing device

## Claims

1. A processing device capable of cooperating with another device by being connected to the other device, the processing device comprising:
a determination means for determining whether a user is a person who is permitted to use the processing device when using the processing device;
a setting means for enabling a first function that is a function for identifying a person of the processing device in a case where the determination means determines that the user is a person who is permitted to use the processing device, and disables the first function in a case where the determination means determines that the user is not a person who is permitted to use the processing device; and
an instruction means for causing the processing device to output a signal for enabling tracking of the processing device in a case where the setting means disables the first function.

2. The processing device according to claim 1, comprising:
a first output control means for, in a case where the setting means enables the first function, causing the processing device to output a first signal that is a signal for identifying the person toward a first range at a first timing, and causing the processing device to output the first signal toward a second range having a range overlapping with the first range at a second timing after a predetermined time has elapsed from the first timing.

3. The processing device according to claim 2, wherein
the first output control means determines
the first range and the second range such that the overlapping range includes the person to be specified by the processing device.

4. The processing device according to claim 3, wherein
the first output control means narrows down
at least one of the first range and the second range.

5. The processing device according to claim 1, comprising
a second output control means for outputting, to the other device, a signal for enabling a second function that is a predetermined function of the other device in a case where the processing device is connected to the other device and the determination means determines that the user is not a person permitted to use the processing device.

6. A processing method performed by a processing device capable of cooperating with another device by being connected to the other device, the processing method comprising:
determining whether a user is a person who is permitted to use the processing device when using the processing device;
enabling a first function that is a function for identifying a person of the processing device in a case where the user is determined as a person who is permitted to use the processing device, and disables the first function in a case where the user is determined as not a person who is permitted to use the processing device; and
causing the processing device to output a signal for enabling tracking of the processing device in a case where the first function is disabled.

7. The processing method according to claim 6, further comprising:
in a case where the first function is enabled, causing the processing device to output a first signal that is a signal for identifying the person toward a first range at a first timing, and causing the processing device to output the first signal toward a second range having a range overlapping with the first range at a second timing after a predetermined time has elapsed from the first timing.

8. The processing method according to claim 7, further comprising:
determining the first range and the second range such that the overlapping range includes the person to be specified by the processing device.

9. The processing method according to claim 8, further comprising:
narrowing down at least one of the first range and the second range.

10. The processing method according to any one of claims 6 to 9, further comprising:
outputting, to the other device, a signal for enabling a second function that is a predetermined function of the other device in a case where the processing device is connected to the other device and the user is determined as not a person permitted to use the processing device.

11. A program for causing
a computer of a processing device capable of cooperating with another device by being connected to the other device to execute:
determining whether a user is a person who is permitted to use the processing device when using the processing device;
enabling a first function that is a function for identifying a person of the processing device in a case where the user is determined as a person who is permitted to use the processing device, and disables the first function in a case where the user is determined as not a person who is permitted to use the processing device; and
causing the processing device to output a signal for enabling tracking of the processing device in a case where the first function is disabled.

12. The program according to claim 11 for causing the computer to further execute:
in a case where the first function is enabled, causing the processing device to output a first signal that is a signal for identifying the person toward a first range at a first timing, and causing the processing device to output the first signal toward a second range having a range overlapping with the first range at a second timing after a predetermined time has elapsed from the first timing.

13. The program according to claim 12 for causing the computer to further execute:
determining the first range and the second range such that the overlapping range includes the person to be specified by the processing device.

14. The program according to claim 13 for causing the computer to further execute:
narrowing down at least one of the first range and the second range.

15. The program according to any one of claims 11 to 14 for causing the computer to further execute:
outputting, to the other device, a signal for enabling a second function that is a predetermined function of the other device in a case where the processing device is connected to the other device and the user is determined as not a person permitted to use the processing device.
